(19) Europäisches Patentamt
European Patent Office
Office européen des brevets

(11) EP 4 474 874 A1

(12) EUROPEAN PATENT APPLICATION
published in accordance with Art. 153(4) EPC

(43) Date of publication:
**11.12.2024 Bulletin 2024/50**

(21) Application number: **23749532.0**

(22) Date of filing: **19.01.2023**

(51) International Patent Classification (IPC):
***G02B 5/30*** *(2006.01)* ***G02B 1/04*** *(2006.01)*
***G02B 27/02*** *(2006.01)*

(52) Cooperative Patent Classification (CPC):
**G02B 1/04; G02B 5/30; G02B 27/02**

(86) International application number:
**PCT/JP2023/001434**

(87) International publication number:
**WO 2023/149216 (10.08.2023 Gazette 2023/32)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **01.02.2022 JP 2022014105**

(71) Applicant: **MITSUBISHI GAS CHEMICAL COMPANY, INC.**
**Chiyoda-ku**
**Tokyo 100-8324 (JP)**

(72) Inventors:
- **NYUUI, Tatsuki**
  **Tokyo 125-8601 (JP)**
- **OCHI, Noriaki**
  **Tokyo 125-8601 (JP)**
- **TSURUYA, Hirotaka**
  **Tokyo 125-8601 (JP)**

(74) Representative: **Vossius & Partner**
**Patentanwälte Rechtsanwälte mbB**
**Siebertstrasse 3**
**81675 München (DE)**

# (54) HEADMOUNT DISPLAY MEMBER AND OPTICAL LENS USING SAME

(57) The present invention makes it possible to provide a headmount display member which comprises a resin composition having a glass transition temperature (Tg) of 115°C or higher, wherein the saturated water absorption rate in the case of a 3mmt injection-molded product is 1.0% or less, and the in-plane phase difference in the case of a 3mmt injection-molded product is 10 nm or less. The present invention also makes it possible to provide an optical lens or a molded article which comprises said headmount display member.

EP 4 474 874 A1

## Description

TECHNICAL FIELD

The present invention relates to a headmount display member, and further relates to an optical lens, a molded article, a laminate, a half mirror, and a light guide body, which are obtained by using the same.

BACKGROUND ART

In recent years, electronic technologies called VR (Virtual Reality) and AR (Argumented Reality) have been developed rapidly, and as image display apparatuses for them, head mounted display (HMD) products have been becoming widely used.

Since head mounted displays are image display apparatuses which are worn on the head, they are required to be small, lightweight, and less uncomfortable when they are worn. For this reason, in order to reduce the weight, an attempt has been made to provide a light guide body made of resin instead of a conventional light guide body made of glass (Patent Document 1).

Further, resin VR/AR lenses are required to have excellent optical properties and environmental test reliability. As optical properties, not only high transparency (total light transmittance), low haze and low YI, but also low birefringence are required. In particular, low birefringence is important for thick lenses in order to suppress image distortion. Regarding environmental test reliability, changes in the size and optical properties under high-temperature conditions or high-temperature and high-humidity conditions are required to be small.

Polymethyl methacrylate (PMMA), which is conventionally used, has a problem in that it cannot be used for higher-performance lenses because it has high birefringence, poor heat resistance and high water absorption.

PRIOR ART DOCUMENTS

PATENT DOCUMENTS

Patent Document 1: International Publication WO2018/135193 pamphlet

DISCLOSURE OF THE INVENTION

PROBLEMS TO BE SOLVED BY THE INVENTION

The present invention addresses the problem of solving at least one of the above-described conventional problems. The present invention further addresses the problem of providing a headmount display member, by which high-precision images can be viewed without distortion because of low birefringence, and by which deterioration of image quality due to aging and use environment can be suppressed because of high heat resistance and low water absorption (small dimensional change).

MEANS FOR SOLVING THE PROBLEMS

The present inventors diligently made researches in order to solve the above-described problems and found that a headmount display member suitable for highperformance VR/AR lenses can be obtained by using a material having high Tg, low water absorption, and low birefringence in the case of an injection-molded product.

Specifically, the present invention is as described below.

<1> A headmount display member which comprises a resin composition having a glass transition temperature (Tg) of 115°C or higher, wherein the saturated water absorption rate in the case of a 3mmt injection-molded product is 1.0% or less, and wherein the in-plane phase difference in the case of a 3mmt injection-molded product is 10 nm or less.

<2> The headmount display member according to item <1>, wherein the resin composition has an absolute value of photoelastic coefficient of $10\times10^{-12}Pa^{-1}$ or less.

<3> The headmount display member according to item <1> or <2>, wherein the resin composition contains a vinyl copolymer resin (A) comprising a structural unit (a) represented by general formula (1) and a structural unit (b) represented by general formula (2):

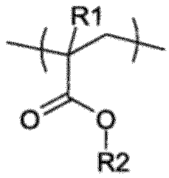

(1)

wherein in general formula (1): R1 represents a hydrogen atom or a methyl group; R2 represents a group having 1 to 16 carbon atoms which has a hydrocarbon group, which may have a hydroxyl group or an alkoxy group; and in the case where a plurality of the structural units (a) exist, R1s and R2s respectively may be the same or different from each other,

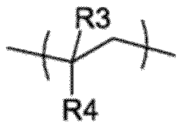

(2)

wherein in general formula (2): R3 represents a hydrogen atom or a methyl group; R4 represents a phenyl group, a cyclohexadienyl group, a cyclohexenyl group or a cyclohexyl group which may have at least one substituent selected from the group consisting of a hydrocarbon group having 1 to 4 carbon atoms, a hydroxyl group, an alkoxy group and a halogen atom; and in the case where a plurality of the structural units (b) exist, R3s and R4s respectively may be the same or different from each other.

<4> The headmount display member according to item <3>, wherein in general formula (1), R1 and R2 represent a methyl group, and wherein in general formula (2): R3 represents a hydrogen atom; and R4 represents a cyclohexyl group which does not have a substituent.
<5> The headmount display member according to item <3> or <4>, wherein the ratio of the structural unit (a) to the total of the structural units (a) and (b) is 30 to 80 mol%.
<6> The headmount display member according to any one of items <1> to <5>, wherein the dimensional change rate at the time of water absorption in the case of a 3mmt injection-molded product is 0.2% or less.
<7> The headmount display member according to any one of items <1> to <6>, wherein the resin composition contains an antioxidant and a mold release agent.
<8> An optical lens comprising the headmount display member according to any one of items <1> to <7>.
<9> A molded article comprising the headmount display member according to any one of items <1> to <7>.
<10> A laminate having at least one vapor deposition layer on the surface of the molded article according to item <9>.
<11> A half mirror comprising the laminate according to item <10>.
<12> A light guide body comprising the laminate according to item <10>.

## ADVANTAGEOUS EFFECT OF THE INVENTION

According to a preferred aspect of the present invention, it is possible to provide a headmount display member, by which high-precision images can be viewed without distortion because of low birefringence, and by which deterioration of image quality due to aging and use environment can be suppressed because of high heat resistance and low water absorption (small dimensional change).

## EMBODIMENTS FOR CARRYING OUT THE INVENTION

Hereinafter, the present invention will be described in detail. Note that the present invention is not limited to the below-described embodiments, and can be arbitrarily changed and then carried out within a range in which the effects of the present invention are exerted.
One embodiment of the present invention is a headmount display member which comprises a resin composition having a glass transition temperature (Tg) of 115°C or higher, wherein the saturated water absorption rate in the case of a 3mmt injection-molded product is 1.0% or less, and wherein the in-plane phase difference in the case of a 3mmt injection-molded product is 10 nm or less.
In a preferred embodiment of the present invention, the resin composition contains a vinyl copolymer resin (A) which comprises a (meth)acrylic acid ester structural unit (a) represented by general formula (1) and a structural unit (b) represented by general formula (2).

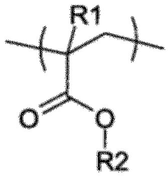

(1)

In general formula (1): R1 represents a hydrogen atom or a methyl group; R2 represents a group having 1 to 16 carbon atoms which has a hydrocarbon group, which may have a hydroxyl group or an alkoxy group; and in the case where a plurality of the structural units (a) exist, R1s and R2s respectively may be the same or different from each other.

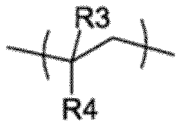

(2)

In general formula (2): R3 represents a hydrogen atom or a methyl group; R4 represents a phenyl group, a cyclohexadienyl group, a cyclohexenyl group or a cyclohexyl group which may have at least one substituent selected from the group consisting of a hydrocarbon group having 1 to 4 carbon atoms, a hydroxyl group, an alkoxy group and a halogen atom; and in the case where a plurality of the structural units (b) exist, R3s and R4s respectively may be the same or different from each other.

In the present invention, an aspect in which: in general formula (1), R1 and R2 represent a methyl group; and in general formula (2), R3 represents a hydrogen atom and R4 represents a cyclohexyl group which does not have any substituent is particularly preferred.

In this regard, "(meth)acrylic acid" indicates "methacrylic acid and/or acrylic acid".

The structural unit (a) is a structural unit derived from a (meth)acrylic acid ester monomer which will be described later, and R1 is a hydrogen atom or a methyl group. Further, R2 is a group having 1 to 16 carbon atoms which has a hydrocarbon group, which may have a hydroxyl group or an alkoxy group. Specific examples thereof include: an alkyl group such as a methyl group, an ethyl group, a butyl group, a lauryl group, a stearyl group, a cyclohexyl group, and an isobornyl group; a hydroxyalkyl group such as a 2-hydroxyethyl group, a 2-hydroxypropyl group, and a 2-hydroxy-2-methylpropyl group; an alkoxyalkyl group such as a 2-methoxyethyl group and a 2-ethoxyethyl group; and an aryl group such as a benzyl group and a phenyl group. In the vinyl copolymer resin (A), R1s and R2s respectively may be the same or different from each other.

As the structural unit (a), a (meth)acrylic acid ester structural unit in which R2 is a methyl group and/or an ethyl group is preferred, and a methyl methacrylate structural unit in which R1 is a methyl group and R2 is methyl group is more preferred.

The structural unit (b) is represented by general formula (2) above. The structural unit (b), in which R4 is a group having a 6-membered ring other than the phenyl group, is obtained by the method for producing the vinyl copolymer resin (A) which will be described later, in which a (meth)acrylic acid ester monomer is copolymerized with an aromatic vinyl monomer which will be described later, and then the benzene ring in the aromatic vinyl monomer is hydrogenated to produce the vinyl copolymer resin (A). In the case where the benzene ring is hydrogenated, the benzene ring becomes a cyclohexyl group when the hydrogenation completely proceeds, and the benzene ring becomes a cyclohexenyl group or a cyclohexadienyl group when the hydrogenation partially proceeds. Further, it is considered that there is a case where hydrogenation is not caused and the benzene ring, i.e., the phenyl group remains. Examples of the hydrocarbon group having 1 to 4 carbon atoms include a methyl group, an ethyl group, a propyl group, an isopropyl group, a butyl group, an isobutyl group, and a tert-butyl group. The alkoxy group usually has 1 to 14 carbon atoms, and specific examples thereof include a methoxy group, an ethoxy group, a propoxy group, an isopropoxy group, a butoxy group, an isobutoxy group, and a tert-butoxy group. Examples of the halogen atom include F, Cl, Br, and I. The vinyl copolymer resin (A) usually has a plurality of structural units (b), and in this case, R3s and R4s respectively may be the same or different from each other.

Further, the structural unit (b) may be a structural unit derived from an aliphatic vinyl monomer which will be described later. That is, in the case where a (meth)acrylic acid ester monomer is copolymerized with an aliphatic vinyl monomer to produce the vinyl copolymer resin (A) as described later, the structural unit (b) is a structural unit derived from the aliphatic vinyl monomer.

In the vinyl copolymer resin (A), the ratio of hydrogenation of the benzene ring in the structural unit (b) is preferably 80% or more. When the ratio of hydrogenation is less than 80%, the transparency may be reduced. The ratio is more preferably 90% or more, and even more preferably 95% or more. The case where the ratio of hydrogenation of the benzene ring in the structural unit (b) is 80% or more means that the ratio of the number of R4s that are a cyclohexadienyl group, a cyclohexenyl group or a cyclohexyl group which may have a substituent to the number of all R4s in the structural units (b) is

80% or more. The case where the ratio of the number is 80% or more means that, for example, when 100 structural units (b) exist, 80 or more of 100 R4s are a cyclohexadienyl group, a cyclohexenyl group or a cyclohexyl group.

The ratio of hydrogenation can be obtained based on the decrease ratio of the absorbance at 260 nm in the UV spectrum measurement of the resin before and after hydrogenation reaction (corresponding to absorption of the benzene ring).

The vinyl copolymer resin (A) is mainly composed of the structural unit (a) and the structural unit (b). The ratio of the structural unit (a) is preferably 30 to 80 mol%, more preferably 50 to 80 mol%, and particularly preferably 63 to 75 relative to the total of the structural unit (a) and the structural unit (b). When the ratio of the structural unit (a) relative to the total of the structural unit (a) and the structural unit (b) is less than 30 mol%, the surface hardness may be reduced and the adhesion to a hard coat paint may be reduced, and it is not practical. Meanwhile, when the ratio is more than 80 mol%, under high-temperature and high-humidity conditions, a crack and haze may be caused in a vapor deposition layer and the size and optical properties may change, and it is not practical.

The vinyl copolymer resin (A) is not particularly limited, and preferred are one obtained by copolymerizing a (meth)acrylic acid ester monomer with an aromatic vinyl monomer, followed by hydrogenation of an aromatic double bond derived from the aromatic vinyl monomer, and one obtained by copolymerizing a (meth)acrylic acid ester monomer with an aliphatic vinyl monomer. The former is particularly preferred.

The (meth)acrylic acid ester monomer to be used in this case preferably has 4 to 20 carbon atoms. The (meth) acrylic acid ester monomer having 4 to 20 carbon atoms is not particularly limited, and specific examples thereof include methyl (meth)acrylate, ethyl (meth)acrylate, butyl (meth)acrylate, lauryl (meth)acrylate, stearyl (meth)acrylate, cyclohexyl (meth)acrylate, isobornyl (meth)acrylate, (2-hydroxyethyl) (meth)acrylate, (2-hydroxypropyl) (meth)acrylate, (2-hydroxy-2-methylpropyl) (meth)acrylate, (2-methoxyethyl) (meth)acrylate, (2-ethoxyethyl) (meth)acrylate, benzyl (meth)acrylate, phenyl (meth)acrylate, and 2-(meth)acryloyloxyethyl phosphorylcholine. Among them, methyl methacrylate is preferred.

Specific examples of the aromatic vinyl monomer include styrene, α-methylstyrene, o-methylstyrene, p-hydroxystyrene, alkoxystyrene, chlorostyrene, and derivatives thereof. Among them, styrene and α-methylstyrene are preferred.

Specific examples of the aliphatic vinyl monomer include vinylcyclohexane, isopropenylcyclohexane, and 1-isopropenyl-2-methylcyclohexane. Among them, vinylcyclohexane is preferred.

Hereinafter, the method for hydrogenation of an aromatic double bond derived from the aromatic vinyl monomer after copolymerizing the (meth)acrylic acid ester monomer with the aromatic vinyl monomer will be described. For polymerizing the (meth)acrylic acid ester monomer and the aromatic vinyl monomer, a publicly-known method can be used, and for example, by a bulk polymerization method, a suspension polymerization method or a solution polymerization method, the vinyl copolymer resin (A) can be produced. The solution polymerization method is carried out, for example, by a method of continuously supplying a monomer composition containing monomers, a chain transfer agent and a polymerization initiator to a complete mixing tank to perform continuous polymerization at 100 to 180°C.

Examples of the solvent to be used in this case include a hydrocarbon-based solvent such as toluene, xylene, cyclohexane, and methylcyclohexane; an ester-based solvent such as ethyl acetate and methyl isobutyrate; a ketone-based solvent such as acetone and methyl ethyl ketone; an ether-based solvent such as tetrahydrofuran and dioxane; and an alcohol-based solvent such as methanol and isopropanol.

The hydrogenation reaction of the aromatic double bond after the polymerization of the (meth)acrylic acid ester monomer and the aromatic vinyl monomer is preferably performed in a solvent. The solvent to be used in the hydrogenation reaction may be the same as or different from the aforementioned polymerization solvent. Examples thereof include a hydrocarbon-based solvent such as cyclohexane and methylcyclohexane; an ester-based solvent such as ethyl acetate and methyl isobutyrate; a ketone-based solvent such as acetone and methyl ethyl ketone; an ether-based solvent such as tetrahydrofuran and dioxane; and an alcohol-based solvent such as methanol and isopropanol.

The method for hydrogenation is not particularly limited, and a publicly-known method can be used. For example, hydrogenation can be performed at a hydrogen pressure of 3 to 30 MPa and a reaction temperature of 60 to 250°C by means of a batch type or continuous flow-type reaction. When the temperature is set to 60°C or higher, the reaction time is not too long, and when the temperature is set to 250°C or lower, cut of a molecular chain and hydrogenation of an ester moiety are hardly caused.

Examples of the catalyst to be used in the hydrogenation reaction include a solid catalyst in which a metal such as nickel, palladium, platinum, cobalt, ruthenium and rhodium, or an oxide, salt or complex of the metal is carried by a porous carrier such as carbon, alumina, silica, silica-alumina, zirconia and diatomaceous earth.

Further, the polymerization of the (meth)acrylic acid ester monomer and the aliphatic vinyl monomer can be carried out by publicly-known methods, for example, the methods described in Japanese Laid-Open Patent Publication No. S63-3011 and Japanese Laid-Open Patent Publication No. S63-170475.

In the present invention, the resin composition containing the vinyl copolymer resin (A) may contain another resin as long as transparency of the product is not impaired. Examples of said another resin that may be contained in the resin

composition include methyl methacrylate/styrene copolymer resin, methyl methacrylate/styrene/maleic anhydride copolymer resin, styrene/methacrylic acid copolymer resin, styrene/maleic anhydride copolymer resin, poly(methyl methacrylate), polystyrene, norbornene-based resin, and polycarbonate.

To the vinyl copolymer resin (A), an additive such as an antioxidant, a processing stabilizer, a light stabilizer, a heavy metal deactivator, a flame retardant, a lubricant, an antistatic agent, a surfactant, an antimicrobial agent, a mold release agent, an ultraviolet absorber, a plasticizer, and a compatibilizer may be added within a range in which the characteristics of the present invention are not impaired. The mixing method is not particularly limited, and it is possible to use a method of compounding the total amount of the additives, a method of dry-blending a master batch, a method of dry-blending the total amount of the additives, or the like.

Examples of the antioxidant include triethylene glycol-bis[3-(3-tert-butyl-5-methyl-4-hydroxyphenyl)propionate], 1,6-hexanediol-bis[3-(3,5-di-tert-butyl-4-hydroxyphenyl)propionate], pentaerythritol-tetrakis[3-(3,5-di-tert-butyl-4-hydroxyphenyl)propionate], octadecyl-3-(3,5-di-tert-butyl-4-hydroxyphenyl)propionate, 1,3,5-trimethyl-2,4,6-tris(3,5-di-tert-butyl-4-hydroxybenzyl)benzene, N,N-hexamethylene bis(3,5-di-tert-butyl-4-hydroxy-hydrocinnamide), 3,5-di-tert-butyl-4-hydroxy-benzylphosphonate-diethyl ester, tris(3,5-di-tert-butyl-4-hydroxybenzyl) isocyanurate, and 3,9-bis{1,1-dimethyl-2-[β-(3-tert-butyl-4-hydroxy-5-methylphenyl)propionyloxy]ethyl}-2,4,8,10-tetraoxaspiro(5,5)undecane. The content of the antioxidant is preferably 0.001 to 0.3 parts by weight relative to 100 parts by weight of the vinyl copolymer resin (A).

Examples of the processing stabilizer include a phosphorus-based processing heat stabilizer and a sulfur-based processing heat stabilizer. Examples of the phosphorus-based processing heat stabilizer include phosphorous acid, phosphoric acid, phosphonous acid, phosphonic acid, and esters thereof. Specific examples thereof include triphenyl phosphite, tris(nonylphenyl) phosphite, tris(2,4-di-tert-butylphenyl) phosphite, tris(2,6-di-tert-butylphenyl) phosphite, tridecyl phosphite, trioctyl phosphite, trioctadecyl phosphite, didecylmonophenyl phosphite, dioctylmonophenyl phosphite, diisopropylmonophenyl phosphite, monobutyldiphenyl phosphite, monodecyldiphenyl phosphite, monooctyldiphenyl phosphite, bis(2,6-di-tert-butyl-4-methylphenyl) pentaerythritol diphosphite, 2,2-methylenebis(4,6-di-tert-butylphenyl) octylphosphite, bis(nonylphenyl) pentaerythritol diphosphite, bis(2,4-dicumylphenyl) pentaerythritol diphosphite, bis(2,4-di-tert-butylphenyl) pentaerythritol diphosphite, distearylpentaerythritol diphosphite, tributyl phosphate, triethyl phosphate, trimethyl phosphate, triphenyl phosphate, diphenyl monoorthoxenyl phosphate, dibutyl phosphate, dioctyl phosphate, diisopropyl phosphate, dimethyl benzenephosphonate, diethyl benzenephosphonate, dipropyl benzenephosphonate, tetrakis(2,4-di-tert-butylphenyl)-4,4'-biphenylene diphosphonate, tetrakis(2,4-di-tert-butylphenyl)-4,3'-biphenylene diphosphonate, tetrakis(2,4-di-tert-butylphenyl)-3,3'-biphenylene diphosphonate, bis(2,4-di-tert-butylphenyl)-4-phenyl-phenylphosphonate, and bis(2,4-di-tert-butylphenyl)-3-phenyl-phenylphosphonate. The content of the phosphorus-based processing heat stabilizer is preferably 0.001 to 0.2 parts by weight relative to 100 parts by weight of the vinyl copolymer resin (A).

Examples of the sulfur-based processing heat stabilizer include pentaerythritoltetrakis(3-lauryl thiopropionate), pentaerythritol-tetrakis(3-myristyl thiopropionate), pentaerythritol-tetrakis(3-stearyl thiopropionate), dilauryl-3,3'-thiodipropionate, dimyristyl-3,3'-thiodipropionate, and distearyl-3,3'-thiodipropionate. The content of the sulfur-based processing heat stabilizer is preferably 0.001 to 0.2 parts by weight relative to 100 parts by weight of the vinyl copolymer resin (A).

Regarding the mold release agent, it is preferred that 90% by weight or more of it is made of an ester of an alcohol and a fatty acid. Specific examples of the ester of an alcohol and a fatty acid include an ester of a monohydric alcohol and a fatty acid and a partial ester or whole ester of a polyhydric alcohol and a fatty acid. As the above-described ester of a monohydric alcohol and a fatty acid, an ester of a monohydric alcohol having 1 to 20 carbon atoms and a saturated fatty acid having 10 to 30 carbon atoms is preferred. Further, as the partial ester or whole ester of a polyhydric alcohol and a fatty acid, a partial ester or whole ester of a polyhydric alcohol having 1 to 25 carbon atoms and a saturated fatty acid having 10 to 30 carbon atoms is preferred.

Specific examples of the ester of a monohydric alcohol and a saturated fatty acid include stearyl stearate, palmityl palmitate, butyl stearate, methyl laurate, and isopropyl palmitate. Specific examples of the partial ester or whole ester of a polyhydric alcohol and a saturated fatty acid include whole esters or partial esters of monoglyceride stearate, diglyceride stearate, triglyceride stearate, monosorbitate stearate, monoglyceride behenate, monoglyceride caprate, monoglyceride laurate, pentaerythritol monostearate, pentaerythritol tetrastearate, pentaerythritol tetrapelargonate, propylene glycol monostearate, biphenyl biphenate, sorbitan monostearate, 2-ethylhexyl stearate and dipentaerythritols such as dipentaerythritol hexastearate. Among them, monoglyceride stearate and monoglyceride laurate are particularly preferred. The content of these mold release agents is preferably 0.005 to 2.0 parts by weight, more preferably 0.01 to 0.6 parts by weight, and even more preferably 0.02 to 0.5 parts by weight relative to 100 parts by weight of the vinyl copolymer resin (A).

The ultraviolet absorber is preferably at least one ultraviolet absorber selected from the group consisting of a benzotriazole-based ultraviolet absorber, a benzophenone-based ultraviolet absorber, a triazine-based ultraviolet absorber, a cyclic iminoester-based ultraviolet absorber and a cyanoacrylate-based ultraviolet absorber. That is, ultraviolet absorbers mentioned below may be used solely, or two or more of them may be used in combination.

Examples of the benzotriazole-based ultraviolet absorber include 2-(2-hydroxy-5-methylphenyl)benzotriazole,

2-(2-hydroxy-5-tert-octylphenyl)benzotriazole, 2-(2-hydroxy-3,5-dicumylphenyl)phenylbenzotriazole, 2-(2-hydroxy-3-tert-butyl-5-methylphenyl)-5-chlorobenzotriazole, 2,2'-methylenebis[4-(1,1,3,3-tetramethylbutyl)-6-(2N-benzotriazol-2-yl)phenol], 2-(2-hydroxy-3,5-di-tert-butylphenyl)benzotriazole, 2-(2-hydroxy-3,5-di-tert-butylphenyl)-5-chlorobenzotriazole, 2-(2-hydroxy-3,5-di-tert-amylphenyl)benzotriazole, 2-(2-hydroxy-5-tert-octylphenyl)benzotriazole, 2-(2-hydroxy-5-tert-butylphenyl)benzotriazole, 2-(2-hydroxy-4-octoxyphenyl)benzotriazole, 2,2'-methylenebis(4-cumyl-6-benzotriazolephenyl), 2,2'-p-phenylenebis(1,3-benzoxazin-4-one), and 2-[2-hydroxy-3-(3,4,5,6-tetrahydrophthalimidomethyl)-5-methylphenyl]benzotriazole.

Examples of the benzophenone-based ultraviolet absorber include 2,4-dihydroxybenzophenone, 2-hydroxy-4-methoxybenzophenone, 2-hydroxy-4-octoxybenzophenone, 2-hydroxy-4-benzyloxybenzophenone, 2-hydroxy-4-methoxy-5-sulfoxybenzophenone, 2-hydroxy-4-methoxy-5-sulfoxytrihydrate benzophenone, 2,2'-dihydroxy-4-methoxybenzophenone, 2,2',4,4'-tetrahydroxybenzophenone, 2,2'-dihydroxy-4,4'-dimethoxybenzophenone, 2,2'-dihydroxy-4,4'-dimethoxy-5-sodiumsulfoxybenzophenone, bis(5-benzoyl-4-hydroxy-2-methoxyphenyl)methane, 2-hydroxy-4-n-dodecyloxybenzophonone, and 2-hydroxy-4-methoxy-2'-carboxybenzophenone.

Examples of the triazine-based ultraviolet absorber include 2-(4,6-diphenyl-1,3,5-triazin-2-yl)-5-[(hexyl)oxy]-phenol and 2-(4,6-bis(2,4-dimethylphenyl)-1,3,5-triazin-2-yl)-5-[(octyl)oxy]-phenol.

Examples of the cyclic iminoester-based ultraviolet absorber include 2,2'-bis(3,1-benzoxazin-4-one), 2,2'-p-phenylenebis(3,1-benzoxazin-4-one), 2,2'-m-phenylenebis(3,1-benzoxazin-4-one), 2,2'-(4,4'-diphenylene)bis(3,1-benzoxazin-4-one), 2,2'-(2,6-naphthalene)bis(3,1-benzoxazin-4-one), 2,2'-(1,5-naphthalene)bis(3,1-benzoxazin-4-one), 2,2' -(2-methyl-p-phenylene)bis(3,1 -benzoxazin-4-one), 2,2'-(2-nitro-p-phenylene)bis(3,1-benzoxazin-4-one), and 2,2'-(2-chloro-p-phenylene)bis(3,1-benzoxazin-4-one).

Examples of the cyanoacrylate-based ultraviolet absorber include 1,3-bis-[(2'-cyano-3',3'-diphenylacryloyl)oxy]-2,2-bis[(2-cyano-3,3-diphenylacryloyl)oxy]methyl)propane and 1,3-bis-[(2-cyano-3,3-diphenylacryloyl)oxy]benzene.

The content of the ultraviolet absorber is preferably 0.01 to 3.0 parts by weight, more preferably 0.02 to 1.0 parts by weight, and even more preferably 0.05 to 0.8 parts by weight relative to 100 parts by weight of the vinyl copolymer resin (A). When the content is within these ranges, sufficient weatherability can be imparted to the vinyl copolymer resin (A) according to intended use.

[Characteristics of Headmount Display Member]

The headmount display (hereinafter sometimes referred to as "HMD") member according to one embodiment of the present invention is a molded product which can be produced by melt-molding the above-described resin composition (preferably the resin composition containing the vinyl copolymer resin (A)), and refers to an optical member which transmits and/or separates light, characteristically polarized light.

Hereinafter, characteristics of the HMD member according to one embodiment of the present invention will be described.

<Glass Transition Temperature>

Since the HMD member according to one embodiment of the present invention is made of the resin composition having a glass transition temperature of 115°C or higher, it is quite possible to place it around LED light sources used in recent optical projection apparatuses. Further, when it is made of the above-described resin composition also having thermal stability, it can be suitably used for applications where further high-temperature durability is required. The resin composition to be used in the present invention preferably has a glass transition temperature of 118 to 140°C, and more preferably has a glass transition temperature of 118 to 135°C.

<Saturated Water Absorption Rate (%)>

Regarding the HMD member according to one embodiment of the present invention, the saturated water absorption rate in the case of a 3mmt injection-molded product is 1.0% or less, preferably 0.9% or less, and more preferably 0.7% or less. The lower the value is, the better, but the lower limit is usually about 0.01%. In the present invention, the saturated water absorption rate can be measured by the method described in the Examples below.

<In-Plane Phase Difference Re>

The HMD member according to one embodiment of the present invention is characterized in that the absolute value of in-plane direction phase difference (hereinafter also referred to as "in-plane phase difference") Re in the case of a 3mmt injection-molded product is 10 nm or less. The absolute value of in-plane direction phase difference Re is more

preferably 7 nm or less, even more preferably 6 nm or less, and particularly preferably 5 nm or less.

In general, the absolute value of in-plane direction phase difference Re is an index representing the magnitude of birefringence. The HMD member according to one embodiment of the present invention has a birefringence sufficiently smaller than those of products made of existing resins (e.g., PMMA, PC, cyclic olefin resin, etc.), and is suitable for applications where a low birefringence or zero birefringence is required as the HMD member.

Meanwhile, when the absolute value of in-plane direction phase difference Re is more than 10 nm, it means that the refractive index anisotropy is high, and there is a case where it cannot be used as an HMD member for which low birefringence or zero birefringence is required.

<Photoelastic Coefficient>

When the HMD member according to one embodiment of the present invention is a molded product molded into a film shape, the absolute value of photoelastic coefficient ($C_R$) is preferably $10\times10^{-12}Pa^{-1}$ or less, more preferably $9.0\times10^{-12}Pa^{-1}$ or less, and even more preferably $8.0\times10^{-12}Pa^{-1}$ or less. When the value is within the above-described range, polarization disturbance due to external stress caused by, for example, the difference in linear expansion between the HMD optical member and a case supporting the member, is less likely to occur.

In the present invention, the photoelastic coefficient ($C_R$) is a physical coefficient represented by $R=(C)\times\sigma$, wherein R is the phase difference observed when polarized light is applied to an object in which the magnitude and direction of the distortion S are changed by the addition of external force $\sigma$, and is a value specific to each transparent substance.

The photoelastic coefficient is described in various documents (see, for example, Kagaku Sosetsu, No. 39, 1998 (published by Gakkai Publishing Center)), and is defined by formulae (i-a) and (i-b) below. It is understood that the closer to zero the value of photoelastic coefficient ($C_R$) is, the smaller the change in birefringence due to external force is.

$$C_R=|\Delta n|/\sigma_R \ldots \text{(i-a)}$$

$$|\Delta n|=nx-ny \ldots \text{(i-b)}$$

(In the formulae, $C_R$ represents a photoelastic coefficient, $\sigma_R$ represents a stretching stress, $|\Delta n|$ represents the absolute value of birefringence, nx represents a refractive index in the stretching direction, and ny represents a refractive index in the direction perpendicular to the stretching direction in the plane.)

The absolute value of photoelastic coefficient ($C_R$) within the above-described range is sufficiently smaller than those of existing resins (e.g., PC, cyclic olefin resin, etc.). Accordingly, (photoelastic) birefringence caused by external force is not generated, and therefore the change in birefringence is smaller. Further, (photoelastic) birefringence caused by residual stress at the time of molding is not easily generated, and therefore the birefringence distribution in a molded article is also small.

As described above, it is understood that the HMD member made of the resin composition according to the present invention has a saturated water absorption rate, in-plane phase difference Re and photoelastic coefficient C which are sufficiently smaller (approximately zero) when compared to HMD members made of existing resins.

<Dimensional Change Rate at Time of Water Absorption (%)>

Regarding the HMD member of the present invention, the dimensional change rate at the time of water absorption in the case of a 3mmt injection-molded product is preferably 0.2% or less, more preferably 0.12% or less, and particularly preferably 0.10% or less. In the present invention, the dimensional change rate at the time of water absorption can be measured by the method described in the Examples below.

[Molding of HMD Member]

The HMD member can be produced by melt-molding the resin composition according to the present invention. As the melt-molding method, a melt hot pressing method, an injection molding method or the like can be used. From the viewpoint of productivity, the injection molding method is preferred. Further, it is also possible to continuously extrude the resin composition into a plate-like shape by means of a melt extrusion method and then form the surface into a prism shape by means of the melt hot pressing method.

With respect to forming the surface, it does not matter whether the surface has a regular periodic structure or a structure without any particular regularity. In the case of having a regular periodic structure, one period of the periodic structure is preferably 10 to 500 μm. When the periodic structure is 10 μm or more, light can be controlled as rays.

A molded article obtained by melt-molding in this way may be directly used as the HMD member or may be processed as described below to be used as the HMD member.

[Post-Processing of HMD Member]

The HMD member according to one embodiment of the present invention may be subjected to a dielectric vapor deposition treatment, an anti-reflection treatment, a metal vapor deposition treatment, a hard coat treatment, an anchor coat treatment, a transparent conductive treatment, etc. according to need.

These treatments can be carried out, for example, by vapor-depositing an inorganic compound or a metal compound on the surface of the molded article according to one embodiment of the present invention to provide an inorganic layer or a metal vapor deposition layer. Note that the inorganic layer is preferably a multilayer transparent dielectric film.

[Formation of Multilayer Transparent Dielectric Film]

According to need, to the surface of the HMD member according to one embodiment of the present invention, a multilayer transparent dielectric film can be provided by vapor-depositing an inorganic compound selected from among a metal oxide, a silicon oxide, a metal fluoride, a metal sulfide and a mixture thereof to form one to multiple layers. Specific examples of the metal oxide include titanium oxide, aluminum oxide, zirconium oxide, cerium oxide, bismuth oxide, chromium oxide, iron oxide, hafnium oxide, thallium oxide, tantalum pentoxide, iridium oxide, tungsten oxide, molybdenum oxide, lanthanum oxide, magnesium oxide, samarium oxide, antimony oxide, scandium oxide, tin oxide, yttrium oxide, europium oxide, and zinc oxide. Specific examples of the metal fluoride include aluminum fluoride, magnesium fluoride, barium fluoride, cerium fluoride, calcium fluoride, lanthanum fluoride, lithium fluoride, neodymium fluoride, sodium fluoride, lead fluoride, strontium fluoride, cryolite, and chiolite. Specific examples of the metal sulfide include zinc sulfide and rhodium sulfide.

The thickness of the multilayer transparent dielectric film is not particularly limited, but from the viewpoint of adhesion between the member surface and the dielectric thin film, it is preferably 10 to 500 nm as a whole.

The method for forming the multilayer transparent dielectric film is not particularly limited, and a publicly-known method can be used. Examples thereof include a vacuum deposition method, an ion plating method, a sputtering method, an ion beam-assisted method, and a plasma-assisted method. In the case where the optical thin film is a laminated film consisting of a plurality of layers, the film may be formed by combining these methods. Among them, the vacuum deposition method in which a film raw material is heated by an electron gun is widely used in terms of reproducibility and controllability of optical characteristics and production efficiency. In the case of the vacuum deposition method using electron gun heating, it is preferable to prevent reflection electrons from hitting the substrate in order to improve the adhesion between the molded article and the multilayer dielectric thin film. The method for preventing reflection electrons from hitting the substrate is not particularly limited, and a publicly-known method, for example, the methods described in Japanese Patent No. 5280149 and Japanese Laid-Open Patent Publication No. 2003-193221 can be used.

The multilayer transparent dielectric film may be directly formed on the member surface, or may be formed after performing a surface treatment by means of applying a hard coat agent, an antistatic treatment, etc., and according to need, it is possible to perform a treatment by means of corona discharge or plasma discharge, and a surface treatment by means of applying a primer agent having an epoxy group, an isocyanate group or the like to improve the adhesion to the multilayer transparent dielectric film.

Further, for the purpose of imparting functions such as water repellency and antifouling property, a thin film may be formed on the multilayer transparent dielectric film.

[Formation of Metal Vapor Deposition Layer]

According to need, to the surface of the HMD member according to one embodiment of the present invention, a metal vapor deposition layer may be provided by vapor-depositing a metal compound such as zinc oxide and indium tin oxide to form one to multiple layers.

As in the case of the formation of the multilayer transparent dielectric film, as the method for forming the metal vapor deposition layer, any conventionally known technique such as a vacuum deposition method, a sputtering method and an ion plating method can be used.

The thickness of the metal vapor deposition layer is not particularly limited and can be suitably selected, for example, within a range of 5 nm to 1000 nm, according to the application.

The number of layers of the metal vapor deposition layer is not particularly limited and can be suitably selected according to the application. Further, as in the case of the formation of the multilayer transparent dielectric film, according to need, it is possible to perform a treatment by means of corona discharge or plasma discharge, and a surface treatment by

means of applying a primer agent to improve the adhesion to the metal vapor deposition layer.

In the present invention, a molded article having, on the surface thereof, an inorganic layer (e.g., a multilayer transparent dielectric film) and a metal vapor deposition layer (e.g., aluminum, tin, and silver) like those described above, is also referred to as a "laminate".

[Optical Lens]

Examples of the optical lens according to one embodiment of the present invention include a convex lens, a Fresnel lens, an aspheric lens, an inner lens, a gradient index lens, and the microlens array described in International Publication WO2013/175549 pamphlet.

The thickness of the optical lens according to one embodiment of the present invention is not particularly limited, and can be suitably selected, for example, within a range where the optical path length is 10 to 100000 μm, according to the application.

The optical lens according to one embodiment of the present invention can be produced according to a publicly-known production method, except that the above-described resin composition is used as a material.

[Half Mirror]

The half mirror according to one embodiment of the present invention is characterized in that it includes the above-described laminate, and can be used as a member constituting a headmount display.

As the aforementioned laminate included in the half mirror according to one embodiment of the present invention, one having a multilayer transparent dielectric film and a metal thin film, which are suitably selected according to the application of the half mirror, can be used.

Further, the thickness of the half mirror according to one embodiment of the present invention can be suitably selected within a range where the optical path length is 10 to 100000 μm according to the application.

The method for producing the half mirror according to one embodiment of the present invention is not particularly limited, except that the above-described laminate is included, and the half mirror can be produced according to a publicly-known production method.

The half mirror according to one embodiment of the present invention includes the above-described laminate of the present invention, and therefore has high optical isotropy (low birefringence) and is excellent in heat resistance, color tone, surface hardness, durability under use environment, and inorganic adhesion.

[Light Guide Body]

The light guide body according to one embodiment of the present invention is characterized in that it includes the above-described laminate, and can be used as a member constituting a headmount display.

The light guide body according to one embodiment of the present invention includes any of a plurality of types such as a prism type, a planar type and a wedge substrate type, but the prism type is particularly suitable. A prism-type light guide body is composed of two prisms, and a multilayer transparent dielectric film and a metal thin film are formed on the overlapping surfaces that are joined to each other. That is, the above-described laminate can be used as a prism having a multilayer transparent dielectric film and a metal thin film.

The size of the light guide body according to one embodiment of the present invention is not particularly limited and it may be designed within a range where the optical path length is 10 to 100000 μm.

The method for producing the light guide body according to one embodiment of the present invention is not particularly limited, except that the above-described laminate is included, and the light guide body can be produced according to a publicly-known production method.

The light guide body according to one embodiment of the present invention includes the above-described laminate of the present invention, and therefore has high optical isotropy (low birefringence) and is excellent in heat resistance, color tone, surface hardness, durability under use environment, and inorganic adhesion.

EXAMPLES

Hereinafter, the present invention will be specifically described by way of examples, but the present invention is not limited thereto.

<Method for Measuring Glass Transition Temperature>

Using a DSC7000X-type differential scanning calorimeter manufactured by Hitachi High-Tech Science Corporation, the measurement was carried out with 5 mg of a resin and nitrogen gas being flowed at 30 ml/min at a temperature raising rate of 10°C/min, and calculation was made according to a midpoint method.

<Method for Measuring Saturated Water Absorption Rate (%)>

Using an injection molding machine (manufactured by FANUC Corporation, FANUC ROBOSHOT α-S30iA), a resin material was molded into a circular plate (diameter: 40 mm, thickness: 3 mm). The resin material used was dried at 100°C for 8 hours or more in advance. The cylinder temperature of the injection molding machine was set to 230 to 240°C, the mold temperature was set to a temperature 15°C lower than Tg, and the cooling time was 15 seconds. The saturated water absorption rate of the obtained circular plate was measured in accordance with Method A of JIS-K-7209. Specifically, the circular plate was dried using a dryer whose temperature was adjusted to 50°C until the mass of the circular plate became constant, and after that, the circular plate was immersed in distilled water (23°C) in a container and taken out therefrom at predetermined time intervals, and after the moisture on the surface was wiped off, the measurement of the mass was carried out.

<Method for Measuring In-Plane Phase Difference (nm)>

A circular plate (diameter: 40 mm, thickness: 3 mm) obtained by molding in the same manner as above was subjected to the measurement using a two-dimensional birefringence evaluation apparatus WPA-200 manufactured by Ryokosha Co., Ltd.

<Method for Measuring Photoelastic Coefficients

Regarding a cast film having a thickness of 0.1 mm obtained by forming the resin material, change in birefringence relative to change in load at a wavelength of 633 nm was measured using an ellipsometer M-220 manufactured by JASCO Corporation and calculation was made. Regarding the cast film, a resin solution obtained by dissolving the resin material (5 wt%) in an organic solvent (dichloromethane, etc.) was poured into a smoothly polished SUS formwork, the solvent was evaporated over 12 hours or more, and then drying was further performed at 100°C for 4 hours or more, thereby preparing the cast film.

<Method for Measuring Dimensional Change Rate at Time of Water Absorption (%)>

A water absorption test was carried out in a manner similar to that for the saturated water absorption rate, and a circular plate was taken out from water over time, the size was measured using a micrometer, and calculation was made. Regarding the size, two diameters, which are one in the direction of resin flow at the time of injection molding and the other in the direction perpendicular thereto, were measured, and the average value of the diameters was adopted.

Synthesis Example 1 [Production of Vinyl Copolymer Resin (A1)]

A copolymer resin (A1') consisting of 75 mol% of methyl methacrylate and 25 mol% of styrene was dissolved in methyl isobutyrate to prepare a 10 wt% solution of methyl isobutyrate. To a 1000-mL autoclave, 500 parts by weight of the 10 wt% solution of methyl isobutyrate containing (A1') and 1 part by weight of 10 wt% Pd/C were fed, and the mixture was held under a hydrogen pressure of 9 MPa at 200°C for 15 hours, thereby hydrogenating a benzene ring moiety. The catalyst was removed using a filter, and the filtrate was introduced into a solvent-removing apparatus, thereby obtaining a vinyl copolymer resin (A1) in a pellet form. According to the $^1$H-NMR measurement, the ratio of the methyl methacrylate structural unit was 75 mol%, and according to the measurement of absorbance at a wavelength of 260 nm, the hydrogenation rate of the benzene ring moiety was 99%.

Synthesis Example 2 [Production of Vinyl Copolymer Resin (A2)]

A vinyl copolymer resin (A2) was obtained in a manner similar to that in Synthesis Example 1, except that a copolymer resin (A2') consisting of 63 mol% of methyl methacrylate and 37 mol% of styrene was used instead of (A1') used in Synthesis Example 1. According to the $^1$H-NMR measurement, the ratio of the methyl methacrylate structural unit was 63 mol%, and according to the measurement of absorbance at a wavelength of 260 nm, the hydrogenation rate of the benzene ring moiety was 99%.

Synthesis Example 3 [Production of Vinyl Copolymer Resin (A3)]

A vinyl copolymer resin (A3) was obtained in a manner similar to that in Synthesis Example 1, except that a copolymer resin (A3') consisting of 50 mol% of methyl methacrylate and 50 mol% of styrene was used instead of (A1') used

in Synthesis Example 1. According to the $^{1}$H-NMR measurement, the ratio of the methyl methacrylate structural unit was 50 mol%, and according to the measurement of absorbance at a wavelength of 260 nm, the hydrogenation rate of the benzene ring moiety was 99%.

Synthesis Example 4 [Production of Vinyl Copolymer Resin (A4)]

A vinyl copolymer resin (A4) was obtained in a manner similar to that in Synthesis Example 1, except that a copolymer resin (A4') consisting of 30 mol% of methyl methacrylate and 70 mol% of styrene was used instead of (A1') used in Synthesis Example 1. According to the $^{1}$H-NMR measurement, the ratio of the methyl methacrylate structural unit was 30 mol%, and according to the measurement of absorbance at a wavelength of 260 nm, the hydrogenation rate of the benzene ring moiety was 99%.

(Example 1)

The vinyl copolymer resin (A1) obtained in Synthesis Example 1 was injection-molded to prepare a 3mmt injection-molded product, and the saturated water absorption rate, the in-plane phase difference, and the dimensional change rate at the time of water absorption were measured. The measurement results thereof are shown in Table 1 below together with the measurement results of the glass transition temperature of the resin pellet obtained in Synthesis Example 1 and the photoelastic coefficient of the molded product molded into a film shape.

Next, the vinyl copolymer resin (A1) obtained in Synthesis Example 1 was dried at 100°C for 8 hours or more using an air-blowing constant-temperature dryer DRM420DD manufactured by ADVANTEC, and then injection-molded by an injection molding machine S-2000i30A manufactured by FANUC at a cylinder temperature of 235°C and at a mold temperature that was 10°C lower than the glass transition temperature of the resin, thereby obtaining an optical lens having a diameter of 50 mm and a maximum thickness of 6 mm.

(Examples 2-4)

An optical lens was prepared in a manner similar to that in Example 1, except that one of the vinyl copolymer resins (A2) to (A4) obtained in Synthesis Examples 2-4 was used instead of the vinyl copolymer resin (A1) obtained in Synthesis Example 1. The measurement results of the values of physical properties are shown in Table 1.

(Reference Example 1)

An optical lens was prepared in a manner similar to that in Example 1, except that a resin obtained by nuclear hydrogenation of polystyrene was used instead of the vinyl copolymer resin (A1) obtained in Synthesis Example 1. The measurement results of the values of physical properties are shown in Table 1.

(Comparative Example 1)

An optical lens was prepared in a manner similar to that in Example 1, except that polymethyl methacrylate (PMMA) was used instead of the vinyl copolymer resin (A1) obtained in Synthesis Example 1. The measurement results of the values of physical properties are shown in Table 1.

Table 1

| | Composition of resin before nuclear hydrogenation MMA/St (molar ratio) | Tg (°C) | Saturated water absorption rate (%) | In-plane phase difference (nm) | Photoelastic coefficient ($x10^{-12}Pa^{-1}$) | Dimensional change rate at time of water absorption (%) | Synthetic judgment |
|---|---|---|---|---|---|---|---|
| Example 1 | 75/25 | 120 | 0.9 | 4 | -5 | 0.11 | ○ |
| Example 2 | 63/37 | 120 | 0.5 | 2 | -6 | 0.06 | ○ |
| Example 3 | 50/50 | 123 | 0.4 | 3 | -7 | 0.05 | ○ |
| Example 4 | 30/70 | 129 | 0.3 | 5 | -8 | 0.04 | ○ |

(continued)

| | Composition of resin before nuclear hydrogenation MMA/St (molar ratio) | Tg (°C) | Saturated water absorption rate (%) | In-plane phase difference (nm) | Photoelastic coefficient ($x10^{-12}Pa^{-1}$) | Dimensional change rate at time of water absorption (%) | Synthetic judgment |
|---|---|---|---|---|---|---|---|
| Reference Example 1 | 0/100 | 136 | 0.01 | 10 | -10 | 0.02 | ○ |
| Comparative Example 1 | 100/0 | 114 | 2 | 20 | -4 | 0.40 | × |

**Claims**

1. A headmount display member which comprises a resin composition having a glass transition temperature (Tg) of 115°C or higher, wherein a saturated water absorption rate in the case of a 3mmt injection-molded product is 1.0% or less, and wherein an in-plane phase difference in the case of a 3mmt injection-molded product is 10 nm or less.

2. The headmount display member according to claim 1, wherein the resin composition has an absolute value of photoelastic coefficient of $10\times10^{-12}Pa^{-1}$ or less.

3. The headmount display member according to claim 1 or 2, wherein the resin composition contains a vinyl copolymer resin (A) comprising a structural unit (a) represented by general formula (1) and a structural unit (b) represented by general formula (2):

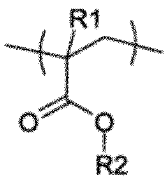

(1)

wherein in general formula (1): R1 represents a hydrogen atom or a methyl group; R2 represents a group having 1 to 16 carbon atoms which has a hydrocarbon group, which may have a hydroxyl group or an alkoxy group; and in the case where a plurality of the structural units (a) exist, R1s and R2s respectively may be the same or different from each other,

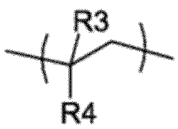

(2)

wherein in general formula (2): R3 represents a hydrogen atom or a methyl group; R4 represents a phenyl group, a cyclohexadienyl group, a cyclohexenyl group or a cyclohexyl group which may have at least one substituent selected from the group consisting of a hydrocarbon group having 1 to 4 carbon atoms, a hydroxyl group, an alkoxy group and a halogen atom; and in the case where a plurality of the structural units (b) exist, R3s and R4s respectively may be the same or different from each other.

4. The headmount display member according to claim 3, wherein in general formula (1), R1 and R2 represent a methyl group, and wherein in general formula (2): R3 represents a hydrogen atom; and R4 represents a cyclohexyl group which does not have a substituent.

5. The headmount display member according to claim 3 or 4, wherein a ratio of the structural unit (a) to the total of the structural units (a) and (b) is 30 to 80 mol%.

6. The headmount display member according to any one of claims 1 to 5, wherein a dimensional change rate at the time of water absorption in the case of a 3mmt injection-molded product is 0.2% or less.

7. The headmount display member according to any one of claims 1 to 6, wherein the resin composition comprises an antioxidant and a mold release agent.

8. An optical lens comprising the headmount display member according to any one of claims 1 to 7.

9. A molded article comprising the headmount display member according to any one of claims 1 to 7.

10. A laminate having at least one vapor deposition layer on the surface of the molded article according to claim 9.

11. A half mirror comprising the laminate according to claim 10.

12. A light guide body comprising the laminate according to claim 10.

**INTERNATIONAL SEARCH REPORT**

International application No. **PCT/JP2023/001434**

**A. CLASSIFICATION OF SUBJECT MATTER**

***G02B 5/30***(2006.01)i; ***G02B 1/04***(2006.01)i; ***G02B 27/02***(2006.01)i
FI: G02B5/30; G02B1/04; G02B27/02 Z

According to International Patent Classification (IPC) or to both national classification and IPC

**B. FIELDS SEARCHED**

Minimum documentation searched (classification system followed by classification symbols)

G02B5/30; G02B1/04; G02B27/02

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2017/169931 A1 (ASAHI KASEI KABUSHIKI KAISHA) 05 October 2017 (2017-10-05) paragraphs [0071], [0190], [0209], [0211]-[0263], table 1 | 1-12 |
| A | JP 2018-156081 A (ASAHI KASEI KABUSHIKI KAISHA) 04 October 2018 (2018-10-04) entire text, all drawings | 1-12 |
| A | JP 2021-162621 A (ASAHI KASEI KABUSHIKI KAISHA) 11 October 2021 (2021-10-11) entire text, all drawings | 1-12 |
| A | US 2002/0001547 A1 (CONNELLY, M. Raymond, et al.) 03 January 2002 (2002-01-03) the whole document, fig. 1-3 | 1-12 |

☐ Further documents are listed in the continuation of Box C.  ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **23 March 2023** | **04 April 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/001434**

| Patent document cited in search report | Publication date (day/month/year) | Patent family member(s) | Publication date (day/month/year) |
|---|---|---|---|
| WO 2017/169931 A1 | 05 October 2017 | US 2019/0256632 A1 paragraphs [0159]-[0160], [0469], [0528], [0530]-[0814], table 1 | |
| | | EP 3438142 A1 | |
| | | KR 10-2018-0110167 A | |
| | | CN 108779213 A | |
| | | TW 201734123 A | |
| | | JP 2017-179355 A | |
| JP 2018-156081 A | 04 October 2018 | US 2018/0267315 A1 | |
| | | CN 108627979 A | |
| JP 2021-162621 A | 11 October 2021 | CN 113467081 A | |
| | | TW 202136821 A | |
| | | TW I733429 B | |
| US 2002/0001547 A1 | 03 January 2002 | EP 1160257 A2 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2018135193 A
- JP 63003011 A
- JP S63170475 A
- JP 5280149 B
- JP 2003193221 A
- WO 2013175549 A